## Europäisches Patentamt

## European Patent Office

## Office européen des brevets

(19)

(11) Numéro de publication: **0 221 802**
**B1**

(12) **FASCICULE DE BREVET EUROPEEN**

(45) Date de publication du fascicule du brevet:
**05.04.89**

(51) Int. Cl.⁴: **B23B 31/26**, G01L 5/24

(21) Numéro de dépôt: **86402184.5**

(22) Date de dépôt: **03.10.86**

(54) **Porte-outil de sécurité pour machine-outil.**

(30) Priorité: **14.10.85 FR 8515201**

(43) Date de publication de la demande:
**13.05.87 Bulletin 87/20**

(45) Mention de la délivrance du brevet:
**05.04.89 Bulletin 89/14**

(84) Etats contractants désignés:
**BE DE ES GB IT NL**

(56) Documents cités:
**DE-A- 3 212 761**
**DE-A- 3 408 310**
**FR-A- 1 451 525**
**FR-A- 2 518 749**
**US-A- 3 201 977**

(73) Titulaire: **Société Nationale Industrielle Aérospatiale Société anonyme dite:, 37 Bld de Montmorency, F-75016 Paris(FR)**

(72) Inventeur: **Baron, Claude, 67, rue Henri Gautier, F-44220 Coueron(FR)**

(74) Mandataire: **Bonnetat, Christian et al, Cabinet PROPI Conseils 23 rue de Léningrad, F-75008 Paris(FR)**

ACTORUM AG

## Description

La présente invention concerne un porte-outil destiné à être monté dans la tête d'une machine-outil comportant des moyens de sécurité, et permettant à un opérateur de contrôler en permanence la valeur de l'effort nécessaire pour le maintien correct de l'outil dans le porte-outil.

Ce porte-outil est plus spécifiquement adapté aux électrobroches de fraiseuses prévues notamment pour l'usinage d'alliages légers, comme par exemple de l'aluminium.

On connaît des électrobroches pour machine-outil, munies d'un porte-outil comprenant un fourreau dans lequel est disposée une tige. Une extrémité du fourreau est conformée en cône avec laquelle est apte à coopérer un outil, tel qu'une fraise, solidaire d'une extrémité de la tige par l'intermédiaire de moyens de préhension tels que des griffes.

Ce porte-outil, selon l'art antérieur, comprend également des moyens de rappel élastique axial qui prennent appui d'une part contre le fourreau et d'autre part contre un écrou de serrage vissé sur un filetage ménagé sur l'autre extrémité de la tige. Ces moyens de rappel élastique tendent à comprimer l'écrou et donc à tirer sur la tige portant l'outil à son extrémité opposée, et permettent de maintenir la tige en position de travail.

Ainsi, l'outil coopère parfaitement avec le cône ménagé dans l'extrémité du fourreau.

La tige peut se déplacer axialement par rapport au fourreau entre une première position de travail avec verrouillage de l'outil par l'intermédiaire des moyens de préhension et une seconde position de repos avec déverrouillage de l'outil, les moyens de préhension libérant alors l'outil sous l'action d'un vérin agissant sur la tige.

Lorsque l'outil travaille, les efforts le sollicitant sont contrés par l'effet de coincement de l'emmanchement conique provoqué par l'effort exercé par les moyens de rappel élastique axial. Ce type de porte-outil donne des résultats satisfaisants, notamment par la simplicité du changement d'outil, mais présente néanmoins un inconvénient majeur portant principalement sur la fiabilité des moyens élastiques de rappel axial. En effet, à force de sollicitations fréquentes et d'efforts de compression importants, ces moyens élastiques, tels que par exemple des rondelles de ressort, se fatiguent et perdent de leur efficacité. En conséquence, l'effort qu'ils exercent diminue avec l'usage, occasionnant un mauvais maintien de la tige supportant l'outil. Si l'effort diminue, le contact de l'outil avec le cône du fourreau ne s'effectue plus parfaitement et provoque un jeu entre l'outil et le cône. Il en résulte une détérioration rapide de l'outil et une qualité de travail médiocre.

De plus, si l'effort exercé par les moyens élastiques décroît rapidement (détérioration d'une ou plusieurs rondelles), la destruction du porte-outil et du cône du fourreau peut se produire en occasionnant de plus grands risques, notamment vis-à-vis de l'opérateur, dûs aux éventuelles projections de pièces.

Pour pallier ces inconvénients, l'invention a pour but de proposer un porte-outil de sécurité pour machine-outil conservant les qualités du porte-outil décrit ci-dessus, et qui comporte des moyens de contrôle permanent de l'effort représentatif exercé par les moyens élastiques de rappel axial.

A cet effet, selon l'invention, le porte-outil de sécurité pour machine-outil comportant un fourreau dans lequel est ménagée une percée axiale débouchante, ledit fourreau étant monté dans un corps solidaire de la machine-outil, une tige disposée dans ladite percée axiale du fourreau, une première extrémité de ladite tige comportant des moyens de préhension aptes à maintenir une tête d'outil, la seconde extrémité de la tige comportant un filetage, cette tige étant apte à se déplacer axialement par rapport audit fourreau entre une position de travail avec verrouillage de l'outil, et une position de repos avec déverrouillage de l'outil, des moyens de rappel élastique axial, prenant appui d'une part contre ledit fourreau et d'autre part contre un écrou vissé sur le filetage de ladite tige et permettant de maintenir la tige dans sa position de travail, est remarquable en ce qu'il comporte des moyens de contrôle permanent de ladite tige dans sa position de travail, cesdits moyens comprenant au moins un capteur agencé sur ledit écrou, des moyens d'alimentation et de transmission électrique dudit capteur, des moyens d'analyse des signaux émis par ledit capteur, et des moyens d'affichage de ces signaux, pour détecter la variation de la déformation élastique de l'écrou sous l'action des moyens de rappel élastique.

Plus précisément, le capteur est constitué de jauges d'extensométrie résistives collées sur l'écrou qui est avantageusement réalisé en un matériau ayant des caractéristiques élastiques suffisantes pour se déformer lors de faibles compressions.

Selon une autre caractéristique de l'invention, les moyens d'alimentation et de transmission des signaux sont constitués par un collecteur tournant comportant principalement un rotor, des balais et porte-balais, alimentant lesdites jauges à l'aide de connexions électriques et transmettant les signaux reçus aux moyens d'analyse. Avantageusement les connexions électriques reliant les jauges au collecteur sont protégées par un carter fixé sur le fourreau.

Les figures du dessin annexé feront bien comprendre comment l'invention peut être réalisée. Sur ces figures, des références identiques désignent des éléments semblables.

La figure 1 représente schématiquement une machine-outil, telle qu'une fraiseuse, munie d'un porte-outil.

La figure 2 représente une coupe d'un porte-outil selon l'art antérieur.

Les figures 3 et 4 représentent, en coupe, le porte-outil selon l'invention respectivement en position de travail et en position de repos.

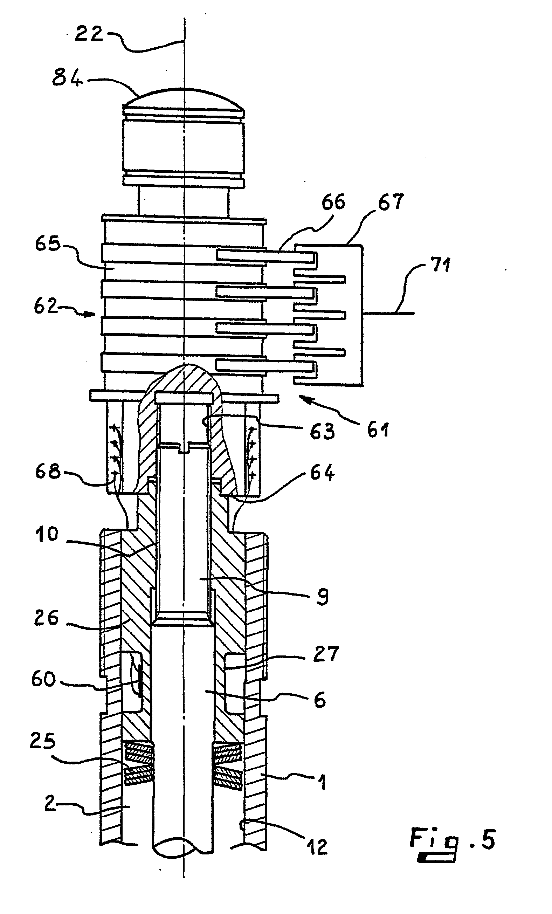

La figure 5 représente une vue agrandie partielle en coupe du porte-outil.

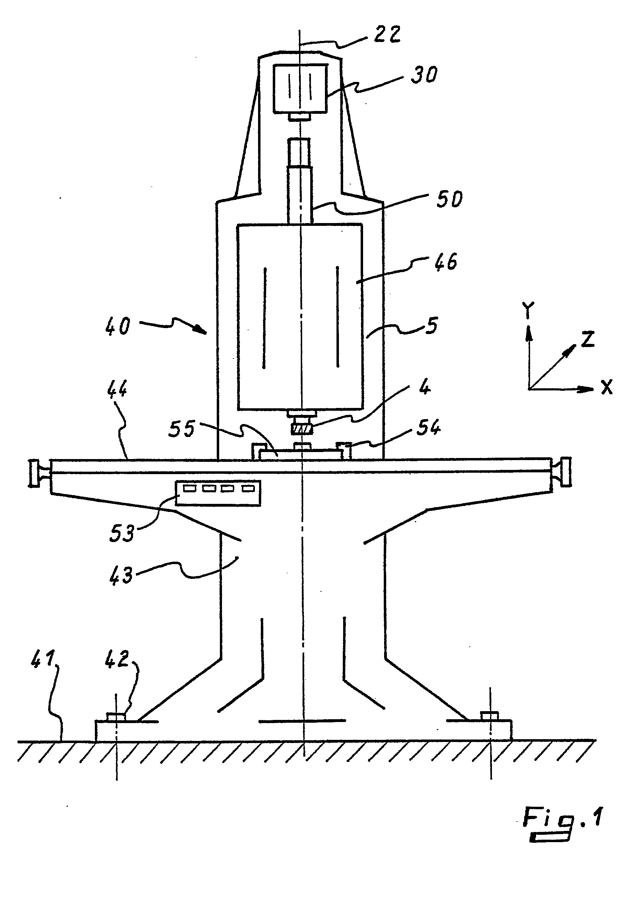

Sur la figure 1, on a représenté schématiquement une fraiseuse 40 fixée au sol 41 par des vis 42.

Cette fraiseuse comporte notamment un bâti 43 supportant une table de travail 44 apte à pouvoir se déplacer suivant trois coordonnées X, Y, Z, à l'aide par exemple, de moyens électriques déplaçant des vis sans fin non représentés sur la figure.

Un corps supérieur 5 est solidaire du bâti 43 à l'intérieur duquel est montée une électrobroche 46 renfermant un porte-outil 50 autour d'un axe 22 et dont l'une des extrémités maintient un outil 4 tel qu'une fraise.

Des moyens de poussée 30 représentés par un vérin électromécanique sont disposés au-dessus du corps supérieur supportant l'électrobroche, coaxialement par rapport à l'axe 22. Un boîtier de commande 53 donne les différentes instructions nécessaires à la bonne marche de la machine-outil (déplacements de la table, rotation, arrêt de l'électrobroche, ...). La table de travail 44 comporte par exemple des brides de serrage 54 permettant la fixation d'une pièce à usiner 55.

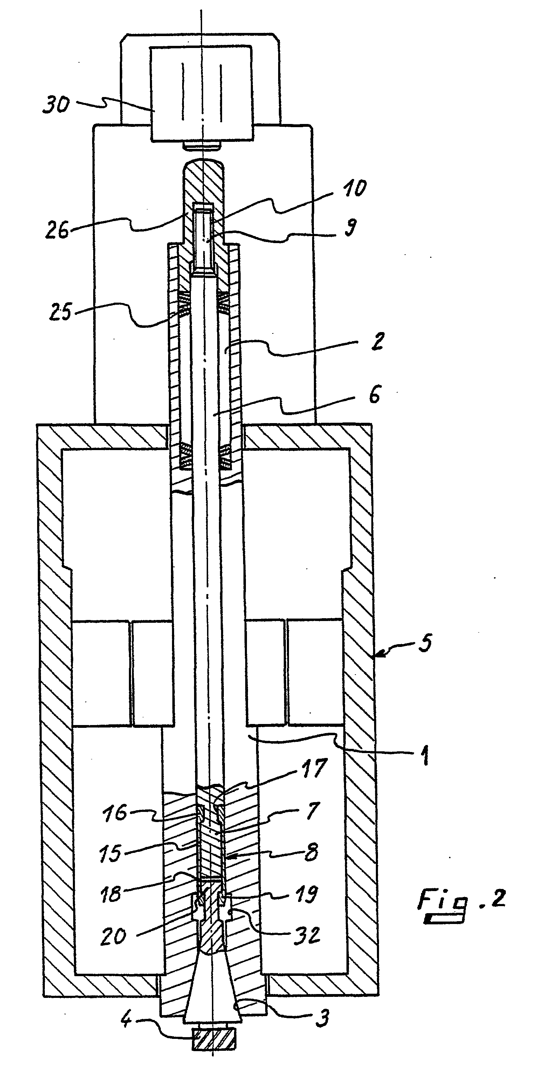

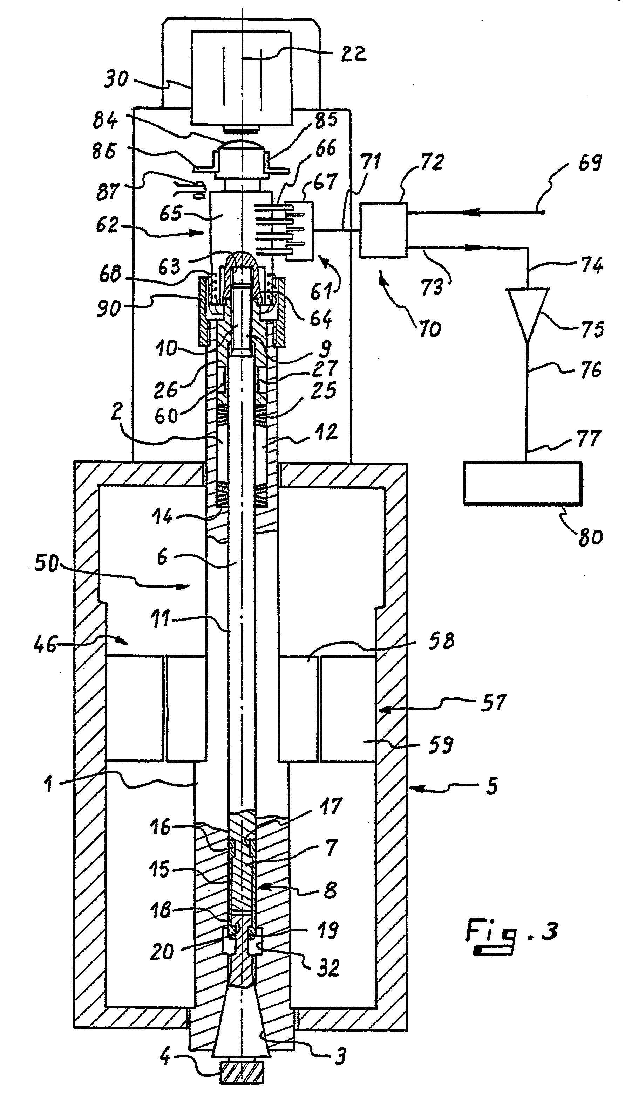

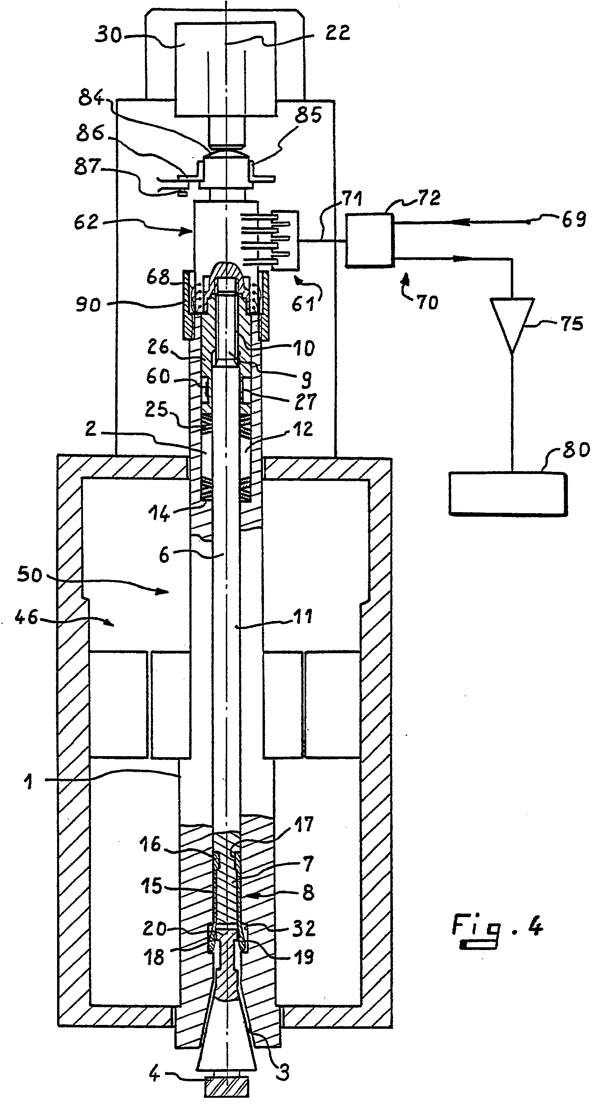

La figure 2 représente une coupe d'un porte-outil selon l'art antérieur et sa description se fera en regard de celle des figures 3 et 4 qui illustrent le porte-outil selon l'invention d'une part en position de travail ou de verrouillage de l'outil (figure 3) et d'autre part en position de repos ou de déverrouillage de l'outil (figure 4).

Ce porte-outil comporte un fourreau 1 dans lequel est ménagée une percée axiale 2 débouchante définie par deux alésages coaxiaux 11 et 12 de diamètres différents, l'alésage 11 correspondant à celui de plus petit diamètre. Le changement de diamètre entre ces deux alésages 11 et 12 à l'intérieur du fourreau est représenté par un épaulement interne 14; l'alésage 11 de ce fourreau se termine par une extrémité conique 3 apte à recevoir la partie conique correspondante de l'outil de travail 4.

Le fourreau 1 est intégré dans le corps 5 (représenté schématiquement sur les figures 2, 3 et 4) solidaire du bâti 43 de la machine-outil. Un moteur électrique 57 est agencé entre le fourreau 1 recevant le rotor 58, et le corps 5 recevant le stator 59 de ce moteur.

Une tige 6 est disposée dans la percée axiale 2 dont le diamètre est sensiblement équivalent à l'alésage de plus petit diamètre 11. Elle comporte à son extrémité inférieure 7, située au voisinage de l'extrémité conique 3 du fourreau, des moyens de préhension 8 définis par une bague 15 dont une première extrémité 16 est emmanchée à force dans une gorge 17 pratiquée dans la tige 6 et dont la seconde extrémité 18 est munie de griffes ou pinces élastiques 19 saillantes par rapport à l'extrémité 7 de la tige. Ces griffes 19 sont aptes à occuper deux positions précisées ci-après.

La tige 6 comporte à son extrémité opposée 9, un filetage 10. Cette tige est apte à se déplacer axialement par rapport au fourreau 1 entre une première position de travail (figure 3) pour laquelle les griffes 19 serrent élastiquement la tête 20 de l'outil 4 et une seconde position de repos (figure 4) pour laquelle les griffes 19 sont élastiquement écartées l'une de l'autre, pour libérer la tête de l'outil. Ces griffes s'insèrent alors dans une échancrure 32 pratiquée dans la percée axiale 2, plus précisément au-dessus de l'extrémité conique 3 de l'alésage 11.

La première position de travail correspond au verrouillage de l'outil et la seconde position de repos correspond au déverrouillage de l'outil.

Ce porte-outil 50 comporte, en outre, des moyens de rappel élastique 25 réalisés par un empilage de rondelles de ressort de type "Belleville" ou "Schnorr" qui prend appui, d'une part, contre l'épaulement interne 14 et, d'autre part, contre un écrou de serrage 26 vissé sur le filetage 10 de l'extrémité 9 de la tige 6. Les rondelles de ressort 25 et l'écrou 26 sont disposés dans l'alésage 12 de plus grand diamètre de la percée axiale. Ces moyens 25 permettent de maintenir la tige 6 dans sa position de travail, en tirant l'outil contre l'extrémité conique 3 grâce aux moyens de préhension 8 disposés à l'extrémité 7 de la tige 6. Ces moyens 25 tendent à comprimer l'écrou de serrage 26 sous l'effet de traction développé par les rondelles de ressorts.

Conformément à l'invention, on prévoit des moyens de contrôle permanent de la tige dans sa position de travail en mesurant pour cela, la variation de l'effort de compression de l'écrou, et plus précisément, les variations de dimension de l'écrou qui sont proportionnelles à l'effort exercé par les rondelles de ressort sur l'écrou.

En conséquence, si l'effort fourni par les rondelles de ressort diminue pour des raisons de fatigue, d'usure, ou de vieillissement, ces moyens de contrôle permanent détecteront ces diverses anomalies.

Avantageusement, l'écrou de serrage 26 est réalisé en un matériau ayant des caractéristiques élastiques susceptibles de se déformer pour de faibles compressions, ce matériau pouvant être un acier.

Ces moyens de contrôle comprennent, par exemple, un capteur constitué par des jauges d'extensométrie résistives 60 disposées par collage dans une échancrure 27 ménagée sur l'écrou 26, des moyens d'alimentation et de transmission électrique 61, des moyens d'analyse des signaux 70 émis par les jauges et des moyens d'affichage 80 de la valeur de l'effort mesuré.

Du fait de la rotation autour de l'axe 22 de l'électrobroche en position de travail, de l'ensemble principalement constitué par le fourreau 1, la tige 6 et l'écrou 26, les moyens d'alimentation et de transmission 61 des signaux comportent un collecteur tournant 62 vissé dans l'extrémité de la tige 6 au moyen d'un trou taraudé 63 pratiqué sur une face 64 du collecteur, cette face venant sensiblement au contact de l'extrémité supérieure de l'écrou 26. Ce collecteur comprend succintement un rotor 65 muni de balais 66 coopérant avec des porte-balais 67 agencés sur le corps 5.

De plus, il est relié aux jauges de contrainte 60 à l'aide de fils de connexion 68, tandis que les porte-balais 67 recevant les signaux transmis par le collecteur, sont reliés aux moyens d'analyse des signaux 70 par une liaison 71. Ces moyens d'analyse 70 comportent notamment un répartiteur 72 des signaux, sélectionnant et traitant ces derniers venant d'une part, de l'alimentation générale 69 et d'autre part, des jauges de contrainte 60, via le collecteur 62.

La sortie 73 du répartiteur est reliée à l'entrée 74 d'un amplificateur 75 dont la sortie 76 est connectée à l'entrée 77 des moyens d'affichage 80 constitués d'un afficheur de type numérique, par exemple à diodes électroluminescentes.

La valeur affichée initialement est représentative de l'effort de compression de l'écrou 26 qu'exerce sur lui les rondelles de ressorts 25.

De plus, le collecteur 62 comporte à son extrémité 84, opposée à celle venant sensiblement en regard de l'écrou 26 par sa face 64, une bague 85 comprenant une collerette 86 apte à venir au contact d'un détecteur de position 87 solidaire du corps 5 de la machine-outil, au moyen d'un vérin 30 du type électromécanique. Ce dernier est également fixé au corps 5, dans l'axe 22 de l'électrobroche 46 et est donc coaxial à l'ensemble du fourreau 1, de la tige 6, de l'écrou 26 et du collecteur 62. La tête du piston de ce vérin est en regard de l'extrémité 84 du collecteur.

Avantageusement, les fils de connexion 68 reliant les jauges 60 au collecteur 62 sont protégés par un carter de protection 90 monté sur l'extrémité supérieure du fourreau 1 par vissage.

Le fonctionnement de ce porte-outil est décrit ci-après en regard des figures 3 et 4, qui illustrent les deux positions limites opérationnelles mentionnées précédemment. L'opérateur introduit la partie conique de l'outil 4 dans l'extrémité conique 3 du fourreau 1 avec laquelle elle coopère parfaitement jusqu'au contact de la tête de l'outil contre l'extrémité 7 de la tige 6 qui se déplace ainsi vers le haut par rapport à l'axe 22. Les moyens de préhension 8, notamment les griffes 19 quittent l'échancrure 32 ménagée dans la percée axiale 2 et se referment sur la tête de la fraise en l'emprisonnant du fait du changement de section entre l'échancrure 32 et le premier alésage 11. Dans une opération de réglage préalable, un opérateur visse l'écrou de serrage 26 au moyen d'une clé dynamométrique autour du filetage 10 de la tige 6 jusqu'à une certaine valeur $V_0$ déterminée préalablement par calcul, entrainant dans son mouvement hélicoïdal les rondelles de ressort 25 en compression. La valeur de cet effort de serrage appliqué sur l'écrou est représentative de la résistance mécanique des rondelles de ressort.

L'opérateur consulte la valeur $V_0$ indiquée et délivrée par l'afficheur numérique 80 recevant les informations électriques en provenance des jauges de contrainte 60 disposées par collage sur l'écrou et des moyens d'analyse 70 et de transmission 61 de ce signaux. Préalablement, ces divers moyens auront été étalonnés.

L'opérateur, après avoir effectué les différents réglages pour l'usinage de la pièce, met en action le moteur 57 de l'électrobroche 46 entrainant de ce fait l'ensemble du fourreau 1, de la tige 6, de l'écrou 26 du collecteur 62 et de l'outil 4 en rotation autour de l'axe 22.

L'opérateur peut contrôler sur l'afficheur numérique 80, une éventuelle variation de la valeur $V_0$ affichée initialement au moyen des informations transmises par les jauges d'extensométrie 60, mesurant en permanence la compression et la dilatation de la partie de l'écrou où elles sont collées et représentatives de l'effort exercé sur la face d'appui de l'écrou de serrage 26 par l'empilage de rondelles 25.

Bien évidemment, la valeur affichée $V_0$ est une valeur maximale de tarage initial, qui ne peut que décroître par suite de la fatigue et l'usure mécanique des rondelles de ressort, dont on mesure justement la diminution éventuelle de leur effort.

Dans le cas d'une perte d'efficacité de ces rondelles 25 (fatigue, amorces de criques, etc.), l'opérateur est averti par l'afficheur numérique 80, qui délivre une valeur $V_0-v$, qui peut être couplée à un dispositif sonore ou lumineux optimisant la sécurité. Dans le cas d'une chute brutale de l'effort fourni par les rondelles de ressort, autorisant une décompression de l'écrou 26 importante, la valeur transmise par les jauges à l'afficheur indique une valeur minimale $V_0-v_1$ dépassant un seuil de tolérance admis, en déclenchant un arrêt immédiat de la broche.

Il est important de préciser, non seulement que ces moyens de contrôle permanent sont avantageux pour prévenir d'une mauvaise fixation de l'outil lors de la rotation de l'électrobroche, mais également lors de l'arrêt même prolongé de la machine-outil.

L'opérateur, en arrivant à son poste de travail, peut constater que l'afficheur numérique délivre une valeur inférieure à celle de référence (complétée éventuellement par un signal sonore ou lumineux) et intervenir en conséquence pour faire changer les rondelles de ressort.

Ce changement s'effectue, électrobroche à l'arrêt, en retirant le carter de protection 90, puis en dévissant à l'aide d'une clé dynamométrique l'écrou de serrage 26.

Le montage de l'écrou contre le nouveau jeu de rondelles de ressort dans l'alésage 12 de la percée axiale 2 du fourreau 1 doit être préalablement soumis au contrôle de son étalonnage indiquant par exemple une valeur 0 dans l'afficheur 80. Le serrage de l'écrou 26 s'effectue à l'aide de la clé jusqu'à atteindre la valeur de tarage initial $V_0$.

Le démontage de l'outil selon l'invention s'effectue, à l'aide du vérin électromécanique 30 actionné par l'opérateur et dont le piston vient en contact de l'extrémité 84 du collecteur 62 entrainant vers le bas l'ensemble de l'écrou 26, de la tige 6, et de l'outil 4 en comprimant les rondelles de ressort 25.

Bien évidemment, la force délivrée par le vérin est supérieure à celle exercée par les rondelles de ressort.

Ainsi, les griffes 19 des moyens de préhension 8 s'écartent progressivement retrouvant par élasticité leur position d'origine pour se loger dans l'échancrure 32 du fourreau 1 qui reste fixe en translation par rapport à l'axe 22. A ce moment là, l'opérateur retire l'outil 4 du porte-outil pour procéder par exemple à un changement d'outillage. Préalablement à l'intervention de l'opérateur, la collerette 86 de la bague 85 liée au collecteur 62 est, lors de la descente de l'ensemble mentionné précédemment, entrée en contact du détecteur de position 87 solidaire du corps 5 provoquant ainsi l'immobilisation en rotation de l'électrobroche tant que le porte-outil est en position de déverrouillage.

Au regard de ce qui a été décrit ci-dessus, les avantages procurés par un tel porte-outil comportant des moyens de contrôle permanent, optimisent non seulement la qualité du travail réalisé évitant notamment les rebuts de pièces, et les opérations de maintenance, mais également la sécurité des opérateurs.

On pourrait concevoir, sans sortir du cadre de l'invention, de connecter directement les jauges de contrainte aux moyens d'analyses des signaux sans passer par un collecteur dans le cas d'une machine-outil dont l'outil travaillerait en translation.

**Revendications**

1. Porte-outil de sécurité pour machine-outil (40) comportant:
- un fourreau (1) dans lequel est ménagée une percée axiale (2) débouchante, ledit fourreau étant monté dans un corps (5) solidaire de la machine-outil;
- une tige (6) disposée dans ladite percée axiale (2) du fourreau, une première extrémité (7) de ladite tige comportant des moyens de préhension (8) apte à maintenir une tête d'outil (4), la second extrémité (9) de la tige comportant un filetage (10), cette tige étant apte à se déplacer axialement par rapport audit fourreau entre une position de travail avec verrouillage de l'outil, et une position de repos avec déverrouillage de l'outil;
- des moyens de rappel élastique (25) axial, prenant appui d'une part, contre ledit fourreau (1) et d'autre part, contre un écrou (26) vissé sur le filetage (10) de ladite tige et permettant de maintenir la tige (6) dans sa position de travail, caractérisé par le fait qu'il comporte des moyens de contrôle permanent de la tige dans sa position de travail, ces moyens comprenant au moins un capteur (60) agencé sur ledit écrou (26), des moyens d'alimentation et de transmission électrique (61) dudit capteur (60), des moyens d'analyse des signaux (70) émis par ledit capteur, et des moyens d'affichage (80) de ces signaux, pour détecter la variation de la déformation élastique de l'écrou (26) sous l'action des moyens de rappel élastique (25).

2. Porte-outil de sécurité selon la revendication 1, caractérisé par le fait que ledit capteur (60) est constitué par des jauges d'extensométrie résistives collées sur ledit écrou (26).

3. Porte-outil selon l'une des revendications précédentes dans laquel le fourreau (1) et la tige (6) sont coaxiaux l'un par rapport à l'autre et aptes à être entraînés en rotation, caractérisé par le fait que les moyens d'alimentation et de transmission des signaux (61) sont constitués par un collecteur (62) tournant comportant principalement un rotor (65), des balais (66) et porte-balais (67), alimentant lesdites jauges (60) à l'aide de connexions électriques, et transmettant les signaux reçus aux moyens d'analyses (70).

4. Porte-outil selon l'une des revendications 1 à 3, caractérisé par le fait que ledit collecteur tournant (62) est fixé par l'une de ses extrémités sur ladite tige (6) pour venir sensiblement au contact dudit écrou (26).

5. Porte-outil selon l'une des revendications 1 à 3, caractérisé par le fait que lesdits moyens d'analyse des signaux (70) sont constitués par un répartiteur (72) et un amplificateur (75).

6. Porte-outil selon l'une des revendications 1, 3 et 5, caractérisé par le fait que lesdits moyens d'affichage (80) sont constitués d'un afficheur de type numérique à diodes électroluminescentes, la valeur affichée initialement étant représentative de l'effort de compression subi par les moyens de rappel élastiques au moyen de l'écrou (26).

7. Porte-outil de sécurité selon l'une des revendications 1 à 6, caractérisé par le fait que ledit écrou (26) est réalisé en un matériau ayant des caractéristiques élastiques, susceptible de se déformer pour de faibles compressions.

8. Porte-outil de sécurité selon la revendication 1, caractérisé par le fait qu'il comporte une bague (85) comprenant une collerette (86) agencée sur l'extrémité opposée à celle se vissant sur le filetage de ladite tige, cette bague (85) étant apte à venir au contact d'un détecteur de position (87) solidaire dudit corps (5), sous l'action d'un vérin électromécanique (30), disposé coaxialement au-dessus de l'ensemble constitué par le collecteur, l'écrou et la tige, apte à déverrouiller l'outil.

9. Porte-outil de sécurité selon l'une des revendications 1 à 7, caractérisé par le fait qu'il comporte un carter de protection (90) fixé sur ledit fourreau (1) assurant la protection des fils de connexion (68) des jauges d'extensométrie (60) au collecteur (62).

10. Machine-outil, caractérisée en ce qu'elle comporte au moins un porte-outil tel que défini sous l'une des revendications 1 à 9.

**Patentansprüche**

1. Sicherheitswerkzeughalter für Werkzeugmaschinen (40) mit:
- einer Hülse (1), in welche eine durchgehende axiale Ausnehmung (2) eingearbeitet ist, wobei die Hülse in einen mit der Werkzeugmaschine fest verbundenen Körper (5) eingebaut ist;
- einer in der axialen Ausnehmung (2) der Hülse angeordneten Stange (6), an deren einem Ende (7) Greifmittel (8) angeordnet sind, die einen Werkzeugkopf (4) halten können, und an deren anderem Ende (9) ein Gewinde (10) angeordnet ist, wobei diese Stange sich bezüglich der Hülse axial bewegen kann zwischen einer Arbeitsposition mit Verriegelung des Werkzeugs und einer Ruheposition mit Entriegelung des Werkzeugs;
- axialen elastischen Rückholmitteln (25), die sich einerseits an der Hülse (1) und andererseits an einer auf das Gewinde (10) der Stange aufgeschraubten Mutter (26) abstützen und die Stange (6) in ihrer Arbeitsposition halten, dadurch gekennzeichnet, daß Mittel zur ständigen Überwachung der Stange (6) in ihrer Arbeitsposition vorgesehen sind, welche Mittel wenigstens einen auf der Mutter (26) angebrachten Meßwertgeber (60), Mittel (61) zur elektrischen Speisung des Meßwertgebers (60) und zur Übertragung der Signale, Mittel (70) zur Analyse der von dem Meßwertgeber ausgesandten Signale und Anzeigemittel (80) für diese Signale aufweisen, um die Veränderungen der elastischen Deformation der Mutter (26) unter der Wirkung der elastischen Rückholmittel (25) zu erfassen.

2. Sicherheitswerkzeughalter nach Anspruch 1, dadurch gekennzeichnet, daß der Meßwertgeber (60) aus auf die Mutter (26) aufgeklebten Dehnungsmeßstreife besteht.

3. Sicherheitswerkzeughalter nach einem der vorhergehenden Ansprüche, bei dem die Hülse (1) und die Stange (6) koaxial zueinander angeordnet sind und in Rotation angetrieben werden, dadurch gekennzeichnet, daß die Mittel (61) zur Speisung und zur Signalübertragung einen rotierenden Kollektor (62) aufweisen, der im wesentlichen aus einem Rotor (65), Bürsten (66) und einem Bürstenträger (67) besteht, die Dehnungsmeßstreifen (60) mit Hilfe von elektrischen Verbindungen speist und die erhaltenen Signale auf die Mittel (70) zur Analyse überträgt.

4. Sicherheitswerkzeughalter nach einem der Ansprüche 1 bis 3, dadurch gekennzeichnet, daß der rotierende Kollektor (62) mit einem Ende an der Stange (6) befestigt und der Mutter (26) nahe gegenübergestellt ist.

5. Sicherheitswerkzeughalter nach einem der Ansprüche 1 bis 3, dadurch gekennzeichnet, daß die Mittel (70) zur Analyse der Signale einen Verteiler (72) und einen Verstärker (75) aufweisen.

6. Sicherheitswerkzeughalter nach einem der Ansprüche 1, 3 und 5, dadurch gekennzeichnet, daß die Anzeigemittel (80) eine Digitalanzeige mit Leuchtdioden aufweisen, wobei der anfänglich angezeigte Wert die Kraft anzeigt, welche von den elastischen Rückholmitteln (25) auf die Mutter (26) ausgeübt wird.

7. Sicherheitswerkzeughalter nach einem der Ansprüche 1 bis 6, dadurch gekennzeichnet, daß die Mutter (26) aus einem Werkstoff mit elastischen Eigenschaften gefertigt ist, der sich bei geringen Kräften deformiert.

8. Sicherheitswerkzeughalter nach Anspruch 1, dadurch gekennzeichnet, daß auf das von dem Gewinde der Stange abgewandte Ende eines Kollektors (62) ein Ring (85) aufgesetzt und mit einem Flansch (86) versehen ist, wobei dieser Ring (85) mit einem am Maschinenkörper (5) befestigten Stellungsgeber (87) zusammenwirkt, und zwar unter der Wirkung einer elektromechanischen Hubvorrichtung (30), die koaxial über der aus dem Kollektor (62), der Mutter (26) und der Stange (6) gebildeten Baueinheit angeordnet ist und das Werkzeug zu entriegeln vermag.

9. Sicherheitswerkzeughalter nach einem der Ansprüche 1 bis 7, dadurch gekennzeichnet, daß er ein auf der Hülse (1) befestigtes Schutzgehäuse (90) aufweist, das die Verbindungsdrähte (68) der Dehnungsmeßstreifen (60) mit dem Kollektor (62) abdeckt.

10. Werkzeugmaschine, dadurch gekennzeichnet, daß sie wenigstens einen Werkzeughalter nach einem der Ansprüche 1 bis 9 aufweist.

## Claims

1. Safety tool-holder for machine-tool (40), of the type comprising:
– a quill (1) in which is axially cut a through-opening (2), said quill being mounted in body (5) integral with the machine-tool;
– a rod (6) placed in said axial opening (2) of the quill, a first end (7) of said rod comprising gripping means (8) adapted to grip a tool head (4), the second end (9) of said rod having a threaded portion (10), and said rod being axially movable with respect to said quill between a working position in which the tool is locked, and a rest position in which the tool is unlocked;
– axial elastic return movement means (25), resting first against the quill (1) and second, against a nut (26) screwed on the threaded portion (10) of said rod and making it possible to keep said rod (6) in its working position, characterized in that it comprises means for continuously controlling the rod in its working position, said means being composed of at least one sensor (60) disposed on said nut (26), electric supply and transmission means (61) for said sensor (60), means for processing the signals (70) produced by said sensor, and means (80) for displaying said signals, in order to detect the variation of the elastic deformation of the nut (26) under the action of the elastic return means (25).

2. Safety tool-holder as claimed in claim 1, characterized in that said sensor (60) is constituted by resistive strain gauges which are adhesively fixed on said nut (26).

3. Tool-holder as claimed in any one of the preceding claims, in which the quill (1) and the rod (6) are co-axial one with respect to the other and adapted to be driven in rotation, characterized in that the signals supply and transmission means (61) are constituted by a rotating collector (62) composed mainly of a rotor (65), brushes (66) and brush-holders (67), supplying said gauges (60) by way of electrical connections and transmitting the received signals to the processing means (70).

4. Tool-holder as claimed in any one of claims 1 to 3, characterized in that said rotating collector (62) is secured by one of its ends to said rod (6) so as to come substantially in contact with said nut (26).

5. Tool-holder as claimed in any one of claims 1 to 3, characterized in that said signals processing means (70) are constituted by a distributor (72) and by an amplifier (75).

6. Tool-holder as claimed in any one of claims 1, 3 and 5, characterized in that said display means (80) are constituted by a digital-type display unit with electroluminescent diodes, the value initially displayed representing the compression strain to which the elastic return means are subjected through the nut (26).

7. Tool-holder as claimed in any one of claims 1 to 6, characterized in that said nut (26) is produced in a material having elastic characteristics and being capable of deforming under low compression forces.

8. Safety tool-holder as claimed in claim 1, characterized in that it comprises a ring (85) having a flange (86), which is placed on the end opposite that which is screwed on the threaded portion of the rod, and said ring (85) being adapted to come into contact with a position sensor (87) which is fast with said body (5), under the action of an electromechanical jack (30) co-axially mounted above the assembly constituted by the collector, the nut and the rod, and capable of unlocking said tool.

9. Safety-holder as claimed in any one of claims 1 to 7, characterized in that a protective housing (90) is fixed on said quill (1) to protect the wires (68) connecting the strain gauges (60) to the collector (62).

10. Machine-tool, characterized in that it comprises at least one tool-holder such as defined in any one of claims 1 to 9.

Fig.1

*Fig .2*

Fig. 3

*Fig. 4*

*Fig.5*